# EUROPEAN PATENT APPLICATION

(11) **EP 3 766 603 A1**
(43) Date of publication of application: **20.01.2021**
(21) Application number: 19020435.4
(22) Date of filing: 18.07.2019
(51) Int. Cl.: B22F 3/105, B33Y 10/00, B33Y 30/00, B33Y 40/00, B29C 64/371

(54) **METHOD AND DEVICE FOR PURGING AN ADDITIVE MANUFACTURING SPACE**

(71) Applicant: Linde GmbH, 82049 Pullach (DE)
(72) Inventor: Graydon, Glen, Llangennech, Llanelli SA14 8YE (GB); Wilders, Stuart, Waterlooville, Hampshire PO7 6BP (GB); Arunprasad, Tanja, 80336 München (DE)
(74) Representative: Gellner, Bernd

(57) **Abstract**

The present invention refers to a method and a corresponding device for purging an additive manufacturing space wherein a liquid inert cryogen is fed to the manufacturing space.

## Description

The present invention relates to a method and to a device for purging additive manufacturing space.

The main differences between processes for additive manufacturing (AM) are in the way layers are deposited to create parts and in the materials that are used. Some methods melt or soften the material to produce the layers, for example selective laser melting (SLM) or direct metal laser sintering (DMLS), selective laser sintering (SLS), fused deposition modeling (FDM), or fused filament fabrication (FFF), while others cure liquid materials using different sophisticated technologies.

Selective laser sintering (SLS) is an additive manufacturing (AM) technique that uses a laser as the power source to sinter powdered material, aiming the laser automatically at points in space defined by a 3D model, binding the material together to create a solid structure. It is similar to direct metal laser sintering (DMLS). Both are instantiations of the same concept but differ in technical details. Selective laser melting (SLM) uses a comparable concept, but in SLM the material is fully melted rather than sintered, allowing different properties (crystal structure, porosity, and so on). SLS involves the use of a high power laser (for example, a carbon dioxide laser) to fuse small particles of plastic, metal, ceramic, or glass powders into a mass that has a desired three-dimensional shape. The laser selectively fuses powdered material by scanning cross-sections generated from a 3-D digital description of the part (for example from a CAD file or scan data) on the surface of a powder bed. After each cross-section is scanned, the powder bed is lowered by one layer thickness, a new layer of material is applied on top, and the process is repeated until the part is completed. Because finished part density depends on peak laser power, rather than laser duration, a SLS machine typically uses a pulsed laser.

Selective laser melting (SLM) is a particular rapid prototyping, 3D printing, or Additive Manufacturing (AM) technique designed to use a high power-density laser to melt and fuse metallic powders together. In many SLM is considered to be a subcategory of Selective Laser Sintering (SLS). The SLM process has the ability to fully melt the metal material into a solid 3D-dimensional part unlike SLS. With selective laser melting, thin layers of atomized fine metal powder are evenly distributed using a coating mechanism onto a substrate plate, usually metal, that is fastened to an indexing table that moves in the vertical (Z) axis. This takes place inside a chamber containing a tightly controlled atmosphere of inert gas, either argon or nitrogen at oxygen levels below 500 parts per million. Once each layer has been distributed, each 2D slice of the part geometry is fused by selectively melting the powder. This is accomplished with a high-power laser beam, usually an ytterbium fiber laser with hundreds of watts. The laser beam is directed in the X and Y directions with two high frequency scanning mirrors. The laser energy is intense enough to permit full melting (welding) of the particles to form solid metal. The process is repeated layer after layer until the part is complete.

Electron-beam additive manufacturing or electron-beam melting (EBM) is a type of additive manufacturing, or 3D printing, for metal parts. The raw material (metal powder or wire) is placed under a vacuum and fused together from heating by an electron beam. This technique is distinct from selective laser sintering as the raw material fuses having completely melted.

Metal powders can be consolidated into a solid mass using an electron beam as the heat source. Parts are manufactured by melting metal powder, layer by layer, with an electron beam in a high vacuum. This powder bed method produces fully dense metal parts directly from metal powder with characteristics of the target material. The EBM machine reads data from a 3D CAD model and lays down successive layers of powdered material. These layers are melted together utilizing a computer-controlled electron beam. In this way it builds up the parts. The process takes place under vacuum, which makes it suited to manufacture parts in reactive materials with a high affinity for oxygen, e.g. titanium. The process is known to operate at higher temperatures (up to 1000 °C), which can lead to differences in phase formation though solidification and solid-state phase transformation.

The powder feedstock is typically pre-alloyed, as opposed to a mixture. That aspect allows classification of EBM with selective laser melting (SLM), where competing technologies like SLS and DMLS require thermal treatment after fabrication. Compared to SLM and DMLS, EBM has a generally superior build rate because of its higher energy density and scanning method.

Selective heat sintering (SHS) is a type of additive manufacturing process. It works by using a thermal print head to apply heat to layers of powdered thermoplastic. When a layer is finished, the powder bed moves down, and an automated roller adds a new layer of material which is sintered to form the next cross-section of the model. SHS is best for manufacturing inexpensive prototypes for concept evaluation, fit/form and functional testing. SHS is a Plastics additive manufacturing technique similar to selective laser sintering (SLS), the main difference being that SHS employs a less intense thermal print head instead of a laser, thereby making it a cheaper solution, and able to be scaled down to desktop sizes.

Direct metal laser sintering (DMLS) is an additive manufacturing metal fabrication technology, occasionally referred to as selective laser sintering (SLS) or selective laser melting (SLM), that generates metal prototypes and tools directly from computer aided design (CAD) data. It is unique from SLS or SLM because the process uses a laser to selectively fuse a fine metal powder. DMLS uses a variety of alloys, allowing prototypes to be functional hardware made out of the same material as production components. Since the components are built layer by layer, it is possible to design organic geometries, internal features and challenging passages that could not be cast or otherwise machined. DMLS produces strong, durable metal parts that work well as both functional prototypes or end-use production parts. The DMLS process begins with a 3D CAD model whereby a .stl file is created and sent to the machine's computer program. The DMLS machine uses a high-powered 200 watt Yb-fiber optic laser. Inside the build chamber area, there is a material dispensing platform and a built platform along with a recoater blade used to move new powder over the built platform. The technology fuses metal powder into a solid part by melting it locally using the focused laser beam. Parts are built up additively layer by layer, typically using layers 20 micrometers thick.

Another approach is to use an electron beam to melt welding wire (Metal wire-based systems; wire ar additive manufacturing WAAM) onto a surface to build up a part. This is similar to the common 3D printing process of fused deposition modeling, but with metal, rather than plastics. With this process, an electron-beam gun provides the energy source used for melting metallic feedstock, which is typically wire. The electron beam is a highly efficient power source that can be both precisely focused and deflected using electromagnetic coils at rates well into thousands of hertz. Typical electron-beam welding systems have high power availability, with 30- and 42-kilowatt systems being most common. A major advantage of using metallic components with electron beams is that the process is conducted within a high-vacuum environment of 1×10⁻⁴ Torr or greater, providing a contamination-free work zone that does not require the use of additional inert gases commonly used with laser and arc-based processes. With EBDM, feedstock material is fed into a molten pool created by the electron beam. Through the use of computer numeric controls (CNC), the molten pool is moved about on a substrate plate, adding material just where it is needed to produce the near net shape. This process is repeated in a layer-by-layer fashion, until the desired 3D shape is produced.

Depending on the part being manufactured, deposition rates can range up to 200 cubic inches (3,300 cm³) per hour. With a light alloy, such as titanium, this translates to a real-time deposition rate of 40 pounds (18 kg) per hour. A wide range of engineering alloys are compatible with the EBDM process and are readily available in the form of welding wire from an existing supply base. These include, but are not limited to, stainless steels, cobalt alloys, nickel alloys, copper nickel alloys, tantalum, titanium alloys, as well as many other high-value materials.

In General additive manufacturing is a manufacturing technology that includes a methodology whereby a heat source melts a feedstock of material which is deposited onto a substrate. Computer control of the movement of the heat source, and the source of the feedstock, makes it possible to build complex components. In additive manufacturing the processing is not limited to the above-mentioned methods in which metal powders are processed but composites or polymers are processed. The heat source can include (but is not limited to) the already mentioned laser beam, an arc, or other plasma-based heat sources.

LMF processes take place in a process chamber that is filled with a process gas. Usually, an inert gas is used, in which the contaminants must be strictly controlled. For example, the oxygen content may not exceed a certain threshold between 1ppm and 1000ppm. Another example of contamination is the moisture present in the process space, which also needs to be tightly controlled. Further examples of impurities are nitrogen, hydrogen, CO₂ and other gases.

When a process chamber of an additive manufacturing device is opened to remove a manufactured component in order to begin production of a new component, ambient air enters the process chamber. This ambient air must be removed by purging the chamber with inert gas until an oxygen content has dropped to a certain threshold. The purging gas is introduced into the process chamber via one or more gas inlets. The purging of the chamber takes a relatively long time, especially when the threshold levels of impurities are low or if the volume of the chamber is large.

Current purging and gas shield method are insufficient in that the oxygen and moisture levels are relatively high at the beginning of the process even though a purge cycle has taken place. The purge cycle in itself takes a long time and reducers the efficiency of the additive manufacturing process in that no building process can take place till the purge cycle is undertaken to bring the oxygen level below a certain threshold for example 6000 ppm oxygen level.

Furthermore large scale automated systems for wire arc additive manufacturing (WAAM) require large enclosures which would encompass and contain inside its external framework all the required welding equipment, tables, automated systems like a ROBOT and or manipulation devices. The size of the enclosures can vary significantly depending on the application in question from roughly 1m³ to over 50 m³ volumes. The problem in the industry is the time it takes to purge the enclosure to remove air which has undesirable components in the air like oxygen, nitrogen and moisture.

Documents DE 196 49 865 C1, WO 2014/199150 A1 and EP 3 219 416 A1 disclose devices and methods for purging a process chamber with for example gaseous argon.

It is an object of the present invention to provide an improved method and an improved device for purging an additive manufacturing space.

It is a further object of the present invention to provide a method and a device for purging an additive manufacturing space wherein oxygen and/or moisture levels in the manufacturing space can be reduced efficiently.

Furthermore it is an object of the present invention to provide a method and a device for purging an additive manufacturing space which reduces the purging time.

One or more of these problems are solved by a method according to independent claim 1 and by an apparatus according to independent claim 10. Advantageous embodiments are defined in the sub-claims.

According to the present invention a method is provided for purging an additive manufacturing space by feeding a liquid inert cryogen to the manufacturing space.

The inventors of the present invention have recognized that the current purging and gas shield methods are insufficient in that the oxygen and moisture levels are relatively high at the beginning of the melting process even though a purge cycle has taken place.

The present invention provides a method for purging air from an additive manufacturing space or chamber especially from a direct energy deposition (DED) additive manufacturing chamber or from a wire arc additive manufacturing (WAAM) chamber by feeding a liquid inert cryogen into the chamber. Upon entering the chamber the liquid cryogen is accelerated into the gaseous phase very rapidly. The gaseous cryogen then displaces the air that is present in the chamber out of the structure and/or reduces the content of oxygen in the chamber to a set predetermined level determined by the sensitivity of the powder to oxygen. In many cases it may require 10 parts per million of oxygen so that the metal powder can be melted.

Within the scope of the present invention an additive manufacturing space or chamber can be a direct energy deposition (DED) additive manufacturing chamber or a wire arc additive manufacturing chamber (WAAM) and can also be any fixed enclosure and also flexible transparent enclosures of different sizes for additive manufacturing.

The additive manufacturing space or chamber can have a volume from about 1 m³ or 2 m³ or 3 m³ or 4 m³ or 5 m³ or 6 m³ or 7 m³ or 8 m³ or 9 m³ or 10 m³ or 11 m³ or 12 m³ or 13 m³ or 14 m³ or 15 m³ or 16 m³ or 17 m³ or 18 m³ or 19 m³ or 20 m³ or 21 m³ or 22 m³ or 23 m³ or 24 m³ or 25 m³ or 26 m³ or 27 m³ or 28 m³ or 29 m³ or 30 m³ or 31 m³ or 32 m³ or 33 m³ or 34 m³ or 35 m³ or 36 m³ or 37 m³ or 38 m³ or 39 m³ or 40 m³ or 41 m³ or 42 m³ or 43 m³ or 44 m³ or 45 m³ or 46 m³ or 47 m³ or 48 m³ or 49 m³ to about 50 m³ volume when larger scale additive manufactured components will be built.

The liquid inert cryogen can be liquid Nitrogen, liquid Argon or liquid Helium.

For example when using liquid Argon the actual oxygen specification levels are less than about 3 vpm (vpm = vapour parts per million) or about 2,5 vpm or about 2 vpm or about 1,5 vpm or about 1vpm. For example when using liquid Argon moisture levels are less than about 2 vpm or about 1,5 vpm or about 1 vpm or about 0,5 vpm.

For example when using liquid Nitrogen the actual oxygen specification levels are less than about or about 6 vpm or about 5,5 vpm or about 5 vpm or about 4,5 vpm 4 vpm. For example when using liquid Nitrogen moisture are less than about 1,5 vpm or about 1 vpm or about 0,5 vpm.

The average flowrate of liquid Nitrogen can be between 0,25 kg/min to 10 kg/min or between 0,5 kg/min to 2,5 kg/min and preferably between 1 kg/min to 2 kg/min.

The average flowrate of liquid Argon can be between 0,25 kg/min to 25 kg/min or between 0,5 kg/min to 12 kg/min and preferably between 1 kg/min to 10 kg/min.

Depending on flowrate, 100ppm are achieved inside the chamber after 7 to 15 minutes for a DED chamber with a volume of 2 m³. For a 1 m³ DED chamber volume 100 ppm are achieved inside the chamber after 57 second.

The liquid inert cryogen can enter the manufacturing space in the way of a pressure wave in order to carry out a power purge wherein this procedure is carried out one time or wherein an interval power purge is provided two, three or more times.

Such a power purge is carried out several times (interval power purge) until the desired values concerning oxygen and/or moisture levels are reached.

Normal practice of reducing the oxygen concentration within an additive manufacturing chamber is to purge the chamber with an appropriate inert gas. The time taken for this purge to reduce the residual oxygen concentration depends on the flow rate of the inert liquid cryogen gas, the size of the chamber and the internal shape of the chamber.

According to the present invention it is proposed to inject a cryogenic liquid by creating a pulsating flow of cryogenic gas via an injector creating a series of pressure waves within the chamber. It is well understood that pressure swings of inert gas will improve the rate of oxygen depletion. This invention can utilize an injection nozzle that will provide a variable frequency of cryogenic liquid injection.

An injection frequency will be of a long duration to rapidly reduce the oxygen concentration by a sweep purge. As the oxygen concentration reduces the frequency of the cryogenic injection will be of a shorter duration producing the desired pressure wave to spread within the chamber. The pressure waves will promote the well understood pressure purge principle to promote the removal of oxygen and/or moisture within any "dead" volumes within the chamber.

The utilization of this methodology for varying the purging method and pulsation frequency will reduce the purge time of additive manufacturing processes significantly.

The liquid purge cycle can automatically be started after any interruption in the process i.e. when the door of the additive manufacturing chamber is opened so that air would be let into the chamber. Reasons to open the chamber might be that the process is interrupted unexpectedly or the build process is complete and the 3D part needs to be withdrawn from the chamber.

In the following further steps for a method for purging air from an additive manufacturing space or chamber especially from a direct energy deposition (DED) additive manufacturing chamber or from a wire arc additive manufacturing (WAAM) chamber by feeding a liquid inert cryogen into the chamber are mentioned.
- Calculate air volume inside machine
- Providing liquid cryogen via a vessel to a manufacturing space of an AM apparatus or a WAAM enclosure. A corresponding inlet port can be positioned in a manufacturing space or chamber of the machine into the machine for example via a top entry, a bottom entry and/or a side entry.
- pressure sensors and temperature sensors can be used to control and manage the feed rate of the liquid into the AM apparatus or WAAM enclosure.
- The displaced air and excess cryogen is piped away safely to atmosphere via a corresponding outlet until the required low oxygen level is achieved.
- Liquid is feed onto a plate (for example an ordinary piece of aluminum plate about 10 mm thick) heat exchanger surface so that the liquid will quickly vaporize and displace the air (alternatively the aluminum can be heated prior to the introduction of the liquid cryogen.
- The heat exchanger plate is preferably placed at the lowest point inside the AM machine volume space so that the liquid cryogen when vaporized will expand from the bottom to the top of the enclosure - the extraction is preferable at the top of the enclosure to ensure the air escapes in a uniformed way with the least amount of air turbulence (least amount of eddies forming in the air flow).

The present invention is applicable to the following aspects of additive manufacturing.

Most powder-bed based additive manufacturing systems use a powder deposition system consisting of a coating process mechanism which spreads a layer of powder onto a substrate plate using a powder reservoir. Examples of the process include Selective Laser Melting (SLM) and Direct Metal Laser Sintering (DMLS).

Laser Metal Fusion is known by many names like metal selective laser sintering, metal laser melting, direct metal printing and direct metal laser sintering. Laser Metal Deposition (LMD), alternatively known as near net shape, is a process which uses a high-power laser beam, connected to a robot or gantry system, to form a melt pool on a metallic substrate into which powder or metal wire is fed.

Systems for direct energy deposition (DED), laser metal deposition additive manufacturing and wire arc additive manufacturing (WAAM) provide a very precise process by automated deposition of a layer of material of thicknesses varying between from 0.05-mm (50 microns) to several centimeters. Thereby the energy source can either be a laser or electron beam or plasma arc or an arc. The feedstock is either metal powder or wire. DED and especially WAAM are preferred for carrying out the present invention.

The process is dissimilar to other welding techniques in that a low heat input penetrates the substrate and it generally aims to produce three-dimensional structures. The An adaption of the process like Laser Engineered Net Shaping (LENS) powder delivery system allows for the adding of material to an already existing part.

It can therefore be used for repairs to expensive metal components that may have been damaged, like chipped turbine blades and injection molding tool inserts.

The invention can relate to a method of manufacturing an article, such as a high value or aerospace article, made from metals alloys such as titanium, aluminum, iron, nickel and/or their alloys using an additive manufacturing method.

Wire arc additive manufacturing (WAAM) uses an electric arc as a heat source and solid wire rather than powder as feedstock. One of the advantages of WAAM technology is that it can be implemented using off-the-shelf welding equipment (GMAW, PLASMA ARC, GTAW etc.).

WAAM Is advantageous for building large scale structures. The deposition rates (i.e. productivity levels) are several times better than using powder bed AM processes (kg per hour as opposed to grams per hour with powder based systems).

Manufacturing large components i.e. greater than 10 kg etc. in steel, aluminum, titanium and other metals is commonly undertaken using Wire Arc Additive Manufacturing.

The WAAM method has High deposition rates, relatively low material and equipment costs, and gives good mechanical properties, this makes Wire Arc Additive Manufacturing a suitable manufacturing process compared solid billets or large forgings, for low and medium complexity components. A number of components have already been successfully manufactured with this process, including Ti-6Al-4V spars and landing gear assemblies, aluminum wing ribs, steel wind tunnel models and cones.

The inventors of the present invention have recognized that current purging and gas shield method are insufficient in that the oxygen and moisture levels are relatively high at the beginning of the process even though a purge cycle has taken place. The purge cycle in itself takes a long time and reducers the efficiency of the additive manufacturing process in that no building process can take place till the purge cycle is undertaken to bring the oxygen level below a certain threshold for example 6000 ppm oxygen level.

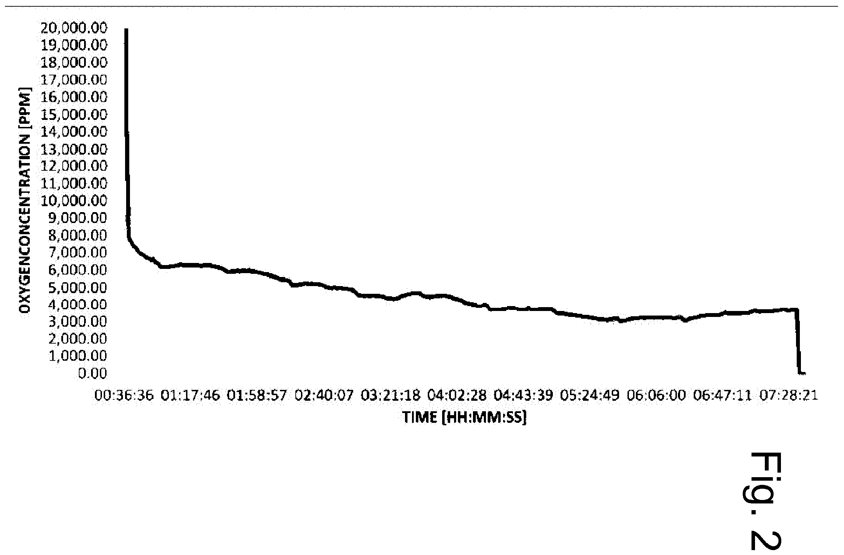

For a relatively medium size sintering chamber (for example about 0.5m³) it can take up to 1 hour and 8 minutes for the oxygen level to reduce to 6228 ppm. The graph in Figure 2 results from a data on a cell with a build cycle of over 7 hours.

By feeding a liquid inert cryogen to the manufacturing space the disadvantage of the long time it takes to purge the chamber is effectively eliminated.

Generally the build cambers of DED systems can be several times larger in volume that powder-bed based systems. It is known that purging DED systems to get down to low oxygen levels can take up to 4 hours before the AM process can be started. This is a massively inefficient.

The liquid cryogen power purge reduces the purging time significantly. Effectively the disadvantage which is eliminated is the time it takes to purge the build chamber.

Therefore one problem to be solved is the extended length of time that is needed for oxygen concentration to be reduced from 200,000 ppm to 100ppm or 10 ppm. The nature of the purging process follows a mathematical power curve of the form Y=A^{∗}X^{-b}.
Y = oxygen concentration vertical axis
A = scaling factor or constant
X = time (in minutes) taken to reach the oxygen level on the graph.
b = exponent or power term of the mathematical expression or formula.

A power curve or power law is a functional relationship between two quantities, Y (oxygen) and X (time in minutes) above where a relative change in one quantity results in a proportional relative change in the other quantity, independent of the initial size of those quantities: one quantity varies as a power of another.

Gas Purging always follow the Power Curve, a fixed law in mathematics. 80% of the reduction in oxygen takes place in 20% of the time but the tail of the curve can be so long ie to get the oxygen levels down further can take a very long time.

The nature of this curve is such that the tail of the curve is very long, leading to extended times for reducing the oxygen concentration from 200 ppm to 10 ppm. This time period is controlled by the diffusion mechanism and cannot appreciably be reduced significantly. This time period is dead time for fabricators and manufacturers as no production can continue until the 10 ppm level is reached.

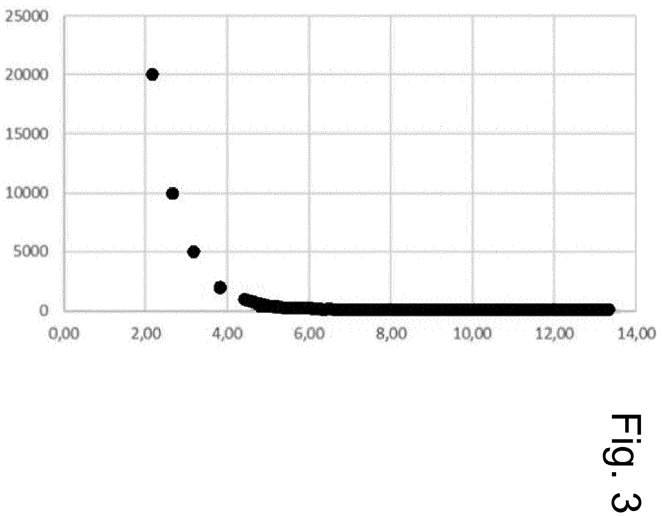

In Figure 3 a purging curve of a test on a similar volume is shown wherein liquid argon was used to purge the manufacturing space. The curve shows that the purge time can be substantially reduced from one hour and eight minutes to four minutes to achieve 300 ppm oxygen. This can be further reduced by increasing the liquid flow rate, a time of 57 seconds was achieved for a higher liquid flow rate.

According to the present invention a method for purging air from an additive manufacturing chamber is provided by feeding a liquid inert cryogen into the chamber. The liquid cryogen will enter the chamber, warm up and accelerate into the gaseous phase very rapidly. the gaseous cryogen will displace the air that is present in the chamber out of the structure and reduce the content of oxygen in the chamber to a set predetermined level determined by the sensitivity of the powder to oxygen, in many cases it may require 10 parts per million of oxygen, so that the metal powder can be melted.

The instant invention reduces the waiting time and utilizes the rapid expansion of liquid cryogenic gases from the liquid phase to the gas phase. The rapid expansion from the liquid to the gaseous state displaces air that is present inside a manufacturing space or a corresponding component of an apparatus for additive manufacturing to be purged, thereby replacing the air and oxygen present therein with the chosen inert cryogen gas.

According to the present invention the manufacturing space can be a built space of a production cylinder defined by a wall of a housing of the production cylinder and a built platform of a lift table disposed inside the wall of the housing. Furthermore, the manufacturing space can be a process chamber of a device for additive manufacturing, preferably a device for Wire Arc Additive Manufacturing.

According to the method of the present invention the liquid inert cryogen can enter the manufacturing space, warms up, and accelerates into the gaseous phase whereby air is displaced from the manufacturing space.

The pressure above the liquid in a cryogenic storage vessels effectively pushes the liquid out the storage vessel through a cryogenic hose to the additive manufacturing chamber."

The content of oxygen in the manufacturing space can thereby be reduced to a set predetermined level.

The set predetermined level can be determined by the sensitivity of the powder to oxygen to approximately 10 parts per million of oxygen, so that the powder can be melted wherein the said oxygen level is preferably less than 1000 ppm or less than 100 ppm or less than 10 ppm.

The method according to the present invention can comprise further manufacturing steps of additive manufacturing after the purging of the manufacturing space, for example when using Wire Arc Additive Manufacturing the process works as follows:
- Programming the tool paths and the starting and the stop points of a welder and a wire feeder via a CAM software. The software is capable of converting any 3D Model into a 3D Printable code. A first step in this process is to 'Slice' the 3D model into numerous 2D layers which is then laid out in terms of precise paths for the 3D Printer to work on.
- Converting the CAM code into coordinate system locations, based on the input design.
- Moving a welding torch in the position of the coordinates and triggering the wire feeder to deposit the material in the path.
- Igniting the Arc is ignited wherein the wire is beginning to feed into the molten weld pool in the given direction.
- Once the first layer is finished, the sufficient cooling time is given and the welding torch moves vertically and the second layer starts printing.
- Once after printing required number of layers, the final part is taken out. Then it goes through cleaning and machining process.

Thus WAAM has proven to be a suitable alternative for large parts with complex geometries used in critical applications

Laser-based wire feed systems, such as Laser Metal Deposition-wire (LMD-w), feed wire through a nozzle that is melted by a laser using inert gas shielding in either an open environment (gas surrounding the laser), or in a sealed chamber. Electron beam freeform fabrication uses an electron beam heat source inside a vacuum chamber.

It is also possible to use conventional gas metal arc welding attached to a 3D stage to 3-D print metals such as steel and aluminium. Low-cost open source RepRap-style 3-D printers have been outfitted with Arduino-based sensors and demonstrated reasonable metallurgical properties from conventional welding wire as feedstock.

The method according to the present invention can comprise further manufacturing steps of additive manufacturing after the purging of the manufacturing space, for example when using a powder bed system the process comprises the further steps of providing a metal powder on the built platform, melting the metal powder with a heat source, and repeating the afore mentioned steps.

In the context of the present invention, supplying the purging medium, namely the liquid inert cryogen in a lower region of the processing chamber approximately at the level of a working plane or below means that the purging medium is supplied to the processing chamber in such a way that the chamber is filled with the purging medium from the bottom upwards. Thus, the invention provides that the purging medium is supplied at the level of the working level or below.

In the context of the present invention, a working plane is understood as a plane which is approximately at the level of the region in which a wire ora metal powder is provided. If the wire or the metal powder is placed on a built platform (wire) or on a built platform of a lift table (powder), then the working plane is always the plane of the last applied layer of the material.

By means of the method according to the invention, the time for purging the process chamber is considerably reduced. Thus, it is possible by means of the method according to the invention to reduce the impurities in the process chamber more efficiently or to bring them faster below a predetermined threshold value.

The fact that the purging medium is supplied at the level of the working level or below, the chamber fills from bottom to top with the process gas.

In this way, the heavier gaseous inert gas pushes the lighter air into the upper area of the process chamber, where an outlet is provided for venting the air. The outlet needs to be of sufficient size to have the capacity to let the expanding gas escape without forming a back pressure wave which would cause a high pressure inside the build chamber.

Within the present invention additive manufacturing techniques like metal selective laser sintering, metal laser melting, direct metal printing and direct metal laser sintering are comprised by the term laser metal fusion (LMF).

Especially the present invention relates to a method for manufacturing a component, such as a high value or arrow space article, comprising titanium and/or titanium alloy using an additive manufacturing method.

The same advantages mentioned in connection with the method for purging air from an additive manufacturing space according to the present invention apply mutatis mutandis to the apparatus for additive manufacturing according to the present invention.

Furthermore, the device for feeding liquid inert cryogen comprises a storage vessel for a liquid inert cryogen and a cryogenic hose feeding device for feeding the liquid inert cryogen to the manufacturing space. The gas pressure above the cryogenic liquid inside the storage vessel drives the liquid out the vessel and through the cryogenic hose into the additive chamber.

Advantageously an oxygen sensor for measuring the proportion of oxygen (O₂) in the manufacturing space is provided in the manufacturing space, wherein the oxygen sensor is connected to a control unit and the control unit is connected to the device for feeding liquid inert cryogen for the controlling device for feeding liquid inert cryogen according to the volume measured by the oxygen sensor.

Wire Arc Additive Manufacturing (WAAM) is a DED technique, which produces near net shape of the component by retrofitting a conventional welding setup.
A typical WAAM apparatus comprises for example the following components:
- A Standard Welding equipment which includes welding power source, torch and wire feeding systems,
- A CNC Gantry table (3 or 5 axis),
- Argon gas cylinders,
- Inert Gas chamber(In case of reactive materials),
   - - A computer Interface which converts the CAD design to G-codes, wherein
A device for feeding liquid inert cryogen to the manufacturing space is connected to the build space and/or to a process chamber of the apparatus.

An Apparatus for additive manufacturing with a powder bed comprises
- A base material delivery system ,
- A heat source which is a device for generating a plasma or an arc or a laser for melting the powder, and
- A process chamber, wherein
A device for feeding liquid inert cryogen to the manufacturing space is connected to the build space and/or to a process chamber of the apparatus.

The device for feeding liquid inert cryogen can comprise a storage vessel for a liquid inert cryogen and a cryogenic feeding hose device for feeding the liquid inert cryogen to the manufacturing space.

The invention is explained below with the aid of an embodiment shown in the drawings. The drawing shows in:

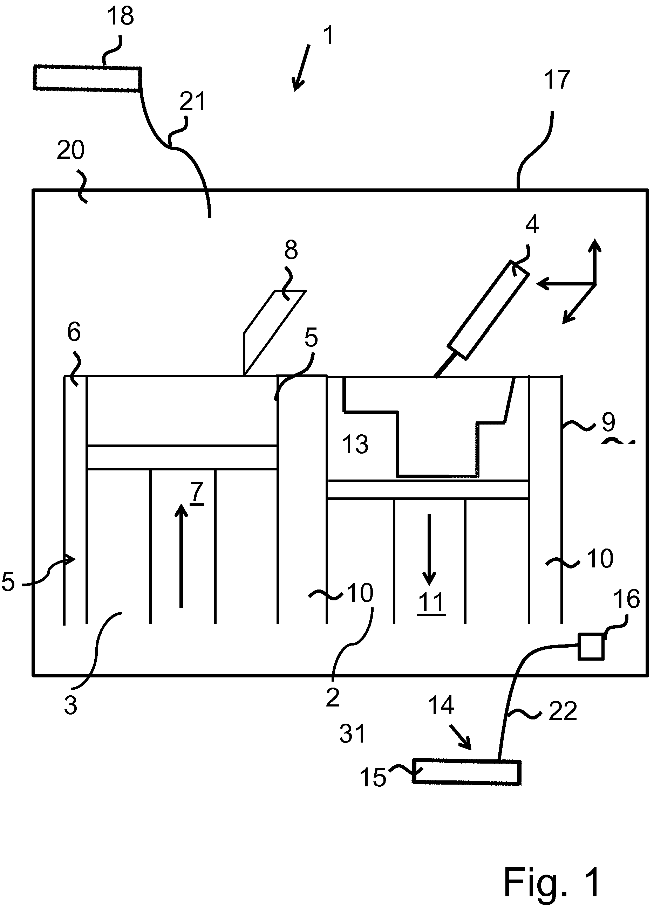

- Figure 1: a rough schematic view of a device for wire arc additive manufacturing according to the present invention,
- Figure 2: a graph of a purge curve according to the prior art,
- Figure 3: a graph of a purge curve according to the present invention, and
- Figure 4: a rough schematic view of a device for powder bed additive manufacturing according to the present invention.

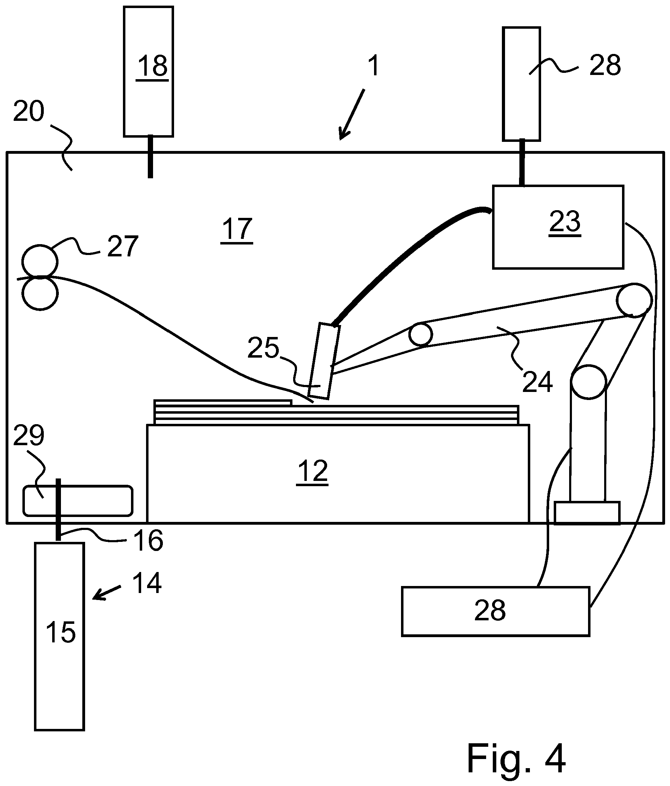

Hereinafter an example of an apparatus for additive manufacturing 1 according to the present invention is explained in detail (Figure 4). It is clear that the present invention is applicable for all methods and devices for additive manufacturing disclosed in this description.

The apparatus 1 comprises a production cylinder 2, a delivery cylinder 3 and a heat source 4.

The heat source 4 according to a preferred embodiment comprises a laser and a corresponding scanner system for melting metal powder (not shown).

The delivery cylinder 3 comprises a housing 5 with a wall 6 wherein a powder delivery piston 7 is disposed inside the housing 5.

A powder applying device 8, for example a roller, is provided for pushing a metal powder from the delivery cylinder 3 to the production cylinder 2.

The production cylinder 3 comprises a housing 9 with a wall 10.

A lift table 11 with a built platform 12 is disposed inside the wall 10 of the housing 9. The lift table 11 and the corresponding built platform 12 embody a fabrication piston.

The wall 10 of the housing 9 and the built platform 12 of the lift table 11 of the production cylinder 2 define a built space 13.

The built space 13 houses the fabrication powder bed and therefore the object being fabricated.

The built platform 12 can be an integral part of the lift table 11 of the fabrication piston or a separate part connected to the lift table 11.

Furthermore a processing chamber 17 is provided surrounding the production cylinder 2, the delivery cylinder 3 and the heat source 4.

The manufacturing space 20 according to the present invention is therefore the build space 13 of the production cylinder 2 defined by the 10 wall of the housing 9 of the production cylinder 2 and the lift table 11 with the built platform 12 disposed inside the wall 10 of the housing 9, and/or the manufacturing space is the room within the processing chamber 17.

According to the present invention a device 14 for feeding liquid inert cryogen to the manufacturing space is connected to the processing chamber 17 of the apparatus 1.

The device 14 for feeding liquid inert cryogen comprises a storage vessel 15 for a liquid inert cryogen and a feeding device 16 for feeding the liquid inert cryogen to the manufacturing space. This feeding device would also control the rate (ie litres per minute) of liquid fed into the chamber.

Furthermore an oxygen sensor (not shown) for measuring the proportion of oxygen (O₂) in the manufacturing space 20 is provided in the manufacturing space 20.

The oxygen sensor is connected to a control unit (not shown) and the control unit is connected to the device 14 for feeding liquid inert cryogen for controlling the device 14 for feeding liquid inert cryogen according to the value measured by the oxygen sensor.

A device for providing a process gas 18 is connected to the processing chamber 17 via a corresponding conduit 21.

As a process gas a reducing or reacting gas can be used in order to avoid oxidation of the built-up component.

In the simplest type of an automatic control loop, a controller compares a measured oxygen value of the process with a desired set value, and processes the resulting error signal to change some input to the process, in such a way that the process reaches the set oxygen point despite disturbances.

When using a powder-fed directed-energy deposition (DED) in connection with the present invention, a high-power laser is used to melt metal powder supplied to the focus of the laser beam. The laser beam typically travels through the center of the deposition head and is focused to a small spot by one or more lenses. The build occurs on a X-Y table which is driven by a tool path created from a digital model to fabricate an object layer by layer. The deposition head is moved up vertically as each layer is completed. Metal powder is delivered and distributed around the circumference of the head or can be split by an internal manifold and delivered through nozzles arranged in various configurations around the deposition head. A hermetically sealed chamber filled with inert gas or a local inert shroud gas is often used to shield the melt pool from atmospheric oxygen for better control of material properties. The powder fed directed energy process is similar to Selective Laser Sintering, but the metal powder is applied only where material is being added to the part at that moment. The process supports a wide range of materials including titanium, stainless steel, aluminum, and other specialty materials as well as composites and functionally graded material. LENS (Laser Engineered Net Shaping), which was developed by Sandia National Labs, is one example of the Powder Fed - Directed Energy Deposition process for 3D printing or restoring metal parts.

Laser-based wire feed systems can also be used for the present invention, such as Laser Metal Deposition-wire (LMD-w), feed wire through a nozzle that is melted by a laser using inert gas shielding in either an open environment (gas surrounding the laser), or in a sealed chamber. Electron beam freeform fabrication uses an electron beam heat source inside a vacuum chamber.

It is also possible to use conventional gas metal arc welding attached to a 3D stage to 3-D print metals such as steel and aluminum. Low-cost open source RepRap-style 3-D printers have been outfitted with Arduino-based sensors and demonstrated reasonable metallurgical properties from conventional welding wire as feedstock.[

The liquid cryogen can be brought in from the bottom at the sinter level of a chamber The pressure above the liquid in the cryogenic storage vessels effectively pushes the liquid out the storage vessel through a cryogenic hose to the additive chamber."

Due to process parameters, AM is typically suited for small or medium sized parts in low to medium volumes. Part size is typically limited, particularly with powder-bed fusion process. For Industrial applications the shift has moved towards Direct Energy Deposition (DED) which has larger deposition rates and are suitable to manufacture large components.

Hereinafter an example of a preferred apparatus for WAAM 1 according to the present invention is explained in detail (Figure 4). It is clear that the present invention is applicable for all methods and devices for additive manufacturing disclosed in this description.

The apparatus 1 comprises a welding machine 23 with a robot 24 a welding torch 24 and a shielding gas device 25.

The apparatus is disposed in a process chamber 17 which can be an inert gas chamber. This process chamber 17 defines a manufacturing space.

A Workbench (built platform) 12 with a substrate is provided in the process chamber 17.

A base material is provided via a wire feeder 27.

The whole apparatus is controlled via a control unit 28.

According to the present invention a device 14 for feeding liquid inert cryogen to the manufacturing space is connected to the processing chamber 17 of the apparatus 1.

The device 14 for feeding liquid inert cryogen comprises a storage vessel 15 for a liquid inert cryogen and a feeding device 16 for feeding the liquid inert cryogen to the manufacturing space. This feeding device would also control the rate (ie litres per minute) of liquid fed into the chamber.

A heat exchanger 29 is disposed preferably at the bottom of the process chamber 17.

Furthermore an oxygen sensor (not shown) for measuring the proportion of oxygen (O₂) in the manufacturing space 20 is provided in the manufacturing space 20.

The oxygen sensor is connected to a control unit (not shown) and the control unit is connected to the device 14 for feeding liquid inert cryogen for controlling the device 14 for feeding liquid inert cryogen according to the value measured by the oxygen sensor.

A device for providing a process gas 18 is connected to the processing chamber 17 via a corresponding conduit 21.

As a process gas a reducing or reacting gas can be used in order to avoid oxidation of the built-up component.

Unless otherwise stated, all technical features described in connection with the embodiments of the apparatus are applicable in connection with method steps for the method according to the present invention.

According to the present invention a method is provided for purging the manufacturing space 20 of an apparatus for additive manufacturing using metal powder.

By this method for additive manufacturing a part is built by selectively sintering or melting a material and building a part additively layer by layer using a heat source sintering or melting the material, wherein the process can be conducted in a process chamber which is purged with a liquid inert cryogen as a purging medium,

The liquid inert cryogen is liquid argon, liquid Nitrogen or liquid helium.

Before starting additive manufacturing like LMS the liquid inert cryogen enters the manufacturing space, warms up, and accelerates into the gaseous phase whereby air is displaced from the manufacturing space.

Thereby the content of oxygen in the manufacturing space is reduced to a set predetermined level.

The set predetermined level is determined by the sensitivity of the powder to oxygen to approximately 10 parts per million of oxygen so that the powder can be melted wherein the set oxygen level is preferably less than 1000 ppm or less than 100 ppm or less than 10 ppm.

In the following further steps for a method for purging air from an additive manufacturing space or chamber especially from a direct energy deposition (DED) additive manufacturing chamber or from a wire arc additive manufacturing (WAAM) chamber by feeding a liquid inert cryogen into the chamber are mentioned.
- Calculating air volume inside additive manufacturing space
- Providing liquid cryogen via a vessel to the manufacturing space of an AM apparatus (machine) or a WAAM enclosure. A corresponding inlet port is positioned in a manufacturing space or chamber of the machine into the machine for example via a top entry, a bottom entry and/or a side entry.
- Pressure sensors and temperature sensors are be used to control and manage the feed rate of the liquid into the AM apparatus or WAAM enclosure.
- The displaced air and excess cryogen is piped away safely to atmosphere via a corresponding outlet until the required low oxygen level is achieved.
- Liquid is feed onto a plate (for example an ordinary piece of aluminum plate about 10 mm thick) heat exchanger surface so that the liquid will quickly vaporize and displace the air (alternatively the aluminum can be heated prior to the introduction of the liquid cryogen.
- The heat exchanger plate is preferably placed at the lowest point inside the AM machine volume space so that the liquid cryogen when vaporized will expand from the bottom to the top of the enclosure - the extraction is preferable at the top of the enclosure to ensure the air escapes in a uniformed way with the least amount of air turbulence (least amount of eddies forming in the air flow).

The method comprises the further steps of:
- Programming the tool paths and the starting and the stop points of a welder and a wire feeder via a CAM software. The software is capable of converting any 3D Model into a 3D Printable code. A first step in this process is to 'Slice' the 3D model into numerous 2D layers which is then laid out in terms of precise paths for the 3D Printer to work on.
- Converting the CAM code into coordinate system locations, based on the input design.
- Moving a welding torch in the position of the coordinates and triggering the wire feeder to deposit the material in the path.
- Igniting the Arc is ignited wherein the wire is beginning to feed into the molten weld pool in the given direction.
- Once the first layer is finished, the sufficient cooling time is given and the welding torch moves vertically and the second layer starts printing.
- Once after printing required number of layers, the final part is taken out. Then it goes through cleaning and machining process.

Or for example comprising the further steps of:
providing a metal powder on the built platform,
melting the metal powder with a heat source and providing a process gas to the area of the built platform.

Then the aforementioned steps are repeated.

The method can be generalized as follows:
The method comprises the further steps of:
providing a base material on a substrate,
melting the base material with a heat source and providing a process gas to the area of the built platform.

Then the aforementioned steps are repeated.

According to the present invention a liquid Argon and/or liquid Helium and/or liquid Nitrogen Power purge is provide to rapidly reduce the oxygen content inside additive manufacturing DED 3D printing chambers or cells or inside additive Manufacturing WAAM 3D manufacturing enclosures or cells..

A method for purging air from an Additive Manufacturing Chamber especially from a DED (Direct energy Deposition) Additive Manufacturing Chamber or from an WAAM Additive Manufacturing Chamber by feeding a liquid inert cryogen into the chamber. The liquid cryogen will enter the chamber, warm up and accelerates into the gaseous phase very rapidly. The gaseous cryogen will displace the air that is present in the chamber out of the structure and reduce the content of oxygen in the chamber to a set predetermined level determined by the sensitivity of the material to oxygen, in many cases it may require 10 parts per million of oxygen so that the wire metal can be melted.

During Additive Manufacturing the laser sintering or laser melting of the powder feed or during Additive Manufacturing the laser sintering or laser melting of the powder feed or during WAAM Additive Manufacturing the arc based wire melting system requires inert gas protection as the resulting molten metal can be in the range of over 600 degrees C for aluminum alloys or over 1500 degrees C for most other metals. It is vital that the melt pool be protected from high temperature oxidation from oxygen in the atmosphere. It is vital that oxygen levels are below 1000 ppm or for sensitive materials like titanium and its alloys, the requirement can be below 100ppm and lower and for some other other alloys very sensitive to oxygen can be as low as 10ppm.

It is always necessary to protect the molten pool from oxidation as this can lead to weld defects and a reduction in corrosion resistance and reduced mechanical properties and lower fatigue & fracture strength. This is particularly the case in creep resistant materials, alloy steels, stainless steels and its alloys, nickel and its alloys, and titanium and its alloys. The usual method of protecting the cell/chamber is to purge the volume by passing a stream of an inert gas such as argon into the cell volume to reduce the oxygen level. This limits the availability of oxygen at the site of the laser melt pool to cause oxidation.

Some materials suffer oxidation discoloration in reactive metals and embrittlement by oxygen.

The problem which is solved by the present invention is the shortened length of time that is needed for oxygen concentration to be reduced from 200,000 ppm to about 10 ppm.

The present invention reduces this waiting time and utilizes the rapid expansion of liquid cryogen from liquid phase to the gas phase. The rapid expansion from the liquid to the gaseous state displaces air that is present inside a vessel or pipe to be purged, thereby replacing the air and oxygen present therein with the chosen inert cryogen gas.

### List of Reference Numbers

- 1: device
- 2: production cylinder
- 3: delivery cylinder
- 4: heat source
- 5: housing
- 6: wall
- 7: powder delivery piston
- 8: powder applying device
- 9: housing
- 10: wall
- 11: lift table
- 12: built platform
- 13: build space
- 14: device for feeding a liquid inert cryogen
- 15: storage vessel
- 16: feeding device
- 17: processing chamber
- 18: process gas device
- 19:
- 20: manufacturing space
- 21: conduit
- 22: conduit
- 23: welding machine
- 24: robot
- 25: welding torch
- 26: shielding gas device
- 28: control unit
- 29: heat exchanger

## Claims

1. Method for purging an additive manufacturing space, **characterized in that**, that a liquid inert cryogen is fed to the manufacturing space.

2. Method according to claim 1, **characterized in that**, that the manufacturing space is a chamber for additive manufacturing like a DED (Direct Energy Deposition) additive manufacturing chamber, preferably a WAAM (Wire Arc Additive Manufacturing) chamber or a LPBF (Laser Powder Bed Fusion, SLM, DMLS) chamber.

3. Method according to claim 1 or 2, **characterized in that**, that the liquid inert cryogen is liquid Nitrogen, liquid Argon or liquid Helium.

4. Method according to one of the claims 1 to 3, **characterized in that**, that the liquid inert cryogen enters the manufacturing space, warms up, and accelerates into the gaseous phase whereby air is displaced from the manufacturing space.

5. Method according to one of the claims 1 to 4, **characterized in that**, the liquid inert cryogen enters the manufacturing space in the way of a pressure wave in order to carry out a power purge wherein this procedure is carried out one time or wherein an interval power purge is provided two, three or more times, wherein the cryogenic liquid is injected creating a pulsating flow of cryogenic gas via an injector creating a series of pressure waves within the chamber.

6. Method according to one of the claims 1 to 5, **characterized in that**, the liquid inert cryogen is routed via an heat exchanger which is disposed in the inside of the additive manufacturing chamber wherein the liquid is feed onto a heat exchanger surface so that the liquid vaporizes and displaces the air.

7. Method according to claim 6, **characterized in that**, the heat exchanger is placed at the lowest point inside the AM space so that the liquid cryogen when vaporized expands from the bottom to the top of the chamber.

8. Method according to one of the claims 1 to 4, **characterized in that**,
that the content of oxygen in the manufacturing space is reduced to a set predetermined level, wherein the set predetermined level is determined by the sensitivity of the powder to oxygen to approximately 10 parts per million of oxygen so that the powder can be melted wherein the set oxygen level is preferably less than 1000 ppm or less than 100 ppm or less than 10 ppm.

9. Method according to claims 1 to 8, **characterized in that**, the method comprises one or more of the further steps, Calculating air volume inside manufacturing space, Controlling the feed rate of the liquid into the AM apparatus or WAAM enclosure via pressure sensors and/or temperature sensors, Displacing air and excess cryogen to atmosphere via a corresponding outlet until the required oxygen level is achieved.

10. Method according to claims 1 to 9, **characterized in that**, the method comprises the further steps of, providing a base material on a substrate, melting the base material with a heat source, and repeating the aforementioned steps.

11. Apparatus for additive manufacturing comprising a base material delivery system , a heat source which is a device for generating a plasma or an arc or a laser for melting the powder, and a process chamber, **characterized in that**,
a device for feeding liquid inert cryogen to the manufacturing space is connected to the build space and/or to a process chamber of the device.

12. Apparatus to claim 11, **characterized in that**, that the device for feeding liquid inert cryogen comprises storage vessel for a liquid inert cryogen and a Cryogenic feeding hose device for feeding the liquid inert cryogen to the manufacturing space.

13. Apparatus according to claim 11 or 12, **characterized in that**, wherein a heat exchanger is preferably disposed at the lowest point inside the AM manufacturing space.

14. Apparatus according to claims 11 to 13, **characterized in that**, that an oxygen sensor (electronic device) for measuring the proportion of oxygen (O₂) in the manufacturing space is provided in the manufacturing space, wherein the oxygen sensor is connected to a control unit and the control unit is connected to the device for feeding liquid inert cryogen for controlling the device for feeding liquid inert cryogen according to the value measured by the oxygen sensor.
